# EUROPEAN PATENT APPLICATION

(11) **EP 2 645 013 A1**
(43) Date of publication of application: **02.10.2013**
(21) Application number: 13161458.8
(22) Date of filing: 27.03.2013
(51) Int. Cl.: F24J 2/52

(54) **System comprising panels for solar energy conversion applicable to vertical surfaces**

(30) Priority: 28.03.2012 IT MI20120496
(71) Applicant: Lanteri, Emanuele, 28921 Verbania (IT)
(72) Inventor: Lanteri, Emanuele, 28921 Verbania (IT)
(74) Representative: Baroni, Matteo

(57) **Abstract**

A system of solar energy conversion panels is described, which is configured for application to a vertical surface, and which comprises: one or more rows of arrays of solar energy conversion panels (2); one or more rows of frames (5); one or more first fastening systems (6, 8), adapted to fasten, whether directly or indirectly, a top end of said arrays of solar energy conversion panels (2) and a bottom end of said one or more rows of frames (5) to said vertical surface; one or more second fastening systems (7), adapted to connect to each other a bottom end of said arrays of solar energy conversion panels (2) and a top end of said one or more rows of frames (5); said panel (2) and frame (5) being arranged at an angle other than zero relative to said vertical surface; said panel (2), frame (5) and vertical surface describing a triangle, wherein the panel (2) constitutes an upper side directed upwards and the frame (5) constitutes a lower side directed downwards, wherein each of said frames (5) supports a respective diffusing panel (4) adapted to diffuse the light impacting upon it towards the underlying solar energy conversion panel (2)

## Description

### Field of the invention

The present invention relates to the field of renewable energy generation systems, more specifically to a system of solar energy conversion panels applicable to vertical surfaces.

### Background art

Typically, solar energy conversion panels are adapted to generate electric energy, e.g. by photovoltaic conversion, or to generate thermal energy for heating up a fluid, e.g. water.

It is well known to install systems of solar energy conversion panels on existing available surfaces for the purpose of producing electric energy.

Arrays of solar energy conversion panels are normally arranged on roofs of buildings, which are typically inclined surfaces.

It is also known to arrange arrays of solar energy conversion panels on essentially horizontal surfaces, such as fields or terraces of buildings.

It is also known to apply rigid or flexible solar energy conversion panels vertically onto vertical surfaces, e.g. walls of buildings, for example covering walls and windows or even replacing the latter.

A solar panel system is known from document KR10100178, wherein each panel is associated with a respective window which, together with the panel itself and the vertical direction (orthogonal to the ground), defines a triangular profile. The set of panels and respective windows is adapted to constitute entire walls of buildings. In other words, it cannot be applied to existing buildings, since it must necessarily be integrated into a new building during the construction thereof.

Each one of said systems has its own drawbacks; for example, high installation costs, poor energetic efficiency, difficult roof installation, possible water seepage.

There is therefore a need for increased energetic efficiency, lower panel installation costs, and greater opportunity of energetic and architectural requalification of the surfaces in use.

### Summary of the invention

It is therefore the object of the present invention to provide a system of solar energy conversion panels applicable to vertical surfaces, which can overcome all of the above-mentioned drawbacks.

In fact, the idea at the basis of the present invention is to use vertical surfaces, such as walls of buildings, for the installation of said panels.

In this regard, the present invention is also adapted to solve further technical problems arising when applying solar energy conversion panels to vertical surfaces, which are due to the need to optimize the arrangement and inclination of the panels themselves, and hence to increase the energetic efficiency as a ratio between the total area occupied by the panels and the quantity of energy produced, especially in those situations where the angle of the solar rays is very different from the optimal situation of orthogonality to the panels.

According to the invention, a succession of small inclined solar energy conversion panels are applied to vertical surfaces, e.g. a wall of a building, so as to obtain a wall covering.

In the present context, the vertical direction is meant to be the one relative to the terrestrial reference system.

The system comprises one or more series of arrays of solar energy conversion panels substantially arranged in horizontal rows having variable inclination, e.g. approx. 30 - 45°, spaced from each other and facing towards the direction of the solar rays, such that they will shade each other only to a limited degree or not at all.

The empty space existing in some solutions between successive series of panels is occupied by frames that contribute to constituting a decorative part of the composition, and that can support different panels made of different materials, e.g. textures, nets, textiles, metals, plastic materials, etc., selected depending on the surface finishing required for the desired general appearance of the vertical surface, e.g. the front of a building.

The frames may have different dimensions, so as to allow for different angles between the frames themselves and the photovoltaic panels.

The frame and the panel, in succession, define a repeatable and flankable vertical development, such as to cover the entire vertical surface or a part thereof.

Various compositions are possible, which can be obtained by aggregating different frames and panels to define different configurations of the vertical surface, which is thus requalified both aesthetically and energetically.

As set out in claim 1, the object of the present invention is a system of solar energy conversion panels configured for application to a vertical surface, comprising: one or more rows of arrays of solar energy conversion panels (2); one or more rows of frames (5); one or more first fastening systems (6, 8), adapted to fasten, whether directly or indirectly, a top end of said arrays of solar energy conversion panels (2) and a bottom end of said one or more rows of frames (5) to said vertical surface; one or more second fastening systems (7), adapted to connect to each other a bottom end of said arrays of solar energy conversion panels (2) and a top end of said one or more rows of frames (5); said panel and frame being arranged at an angle other than zero relative to said vertical surface; said panel, frame and vertical surface describing a triangle, wherein the panel constitutes an upper side directed upwards and the frame constitutes a lower side directed downwards. Each one of said frames (5) supports a respective diffusing panel adapted to diffuse the light impacting upon it towards the underlying solar energy conversion panel (2).

It is a particular object of the present invention to provide a system of solar energy conversion panels applicable to vertical surfaces as described in detail in the appended claims, which are an integral part of the present description.

### Brief description of the drawings

Further objects and advantages of the present invention will become apparent from the following detailed description of a preferred embodiment (and variants) thereof and from the annexed drawings, which are only supplied by way of non-limiting example, wherein:
Figures 1a and 1b show two sectional side views of a first example of a system of photovoltaic panels applied to a vertical surface in accordance with the invention;
Figures 2 and 3 are an axonometric view and a front view, respectively, of the system of Figures 1a and 1b;
Figures 4a and 4b show two sectional side views of a second example of a system of photovoltaic panels applied to a vertical surface in accordance with the invention;
Figures 5a and 5b show two sectional side views of a third example of a system of photovoltaic panels applied to a vertical surface in accordance with the invention;
Figures 6, 7 and 8 show some variants of support systems for the application of the photovoltaic panels to the vertical surfaces;
Figure 9 shows an example of application of a system of photovoltaic panels to a wall of a building.

In the drawings, the same reference numerals and letters identify the same items or components.

### Detailed description of embodiments of the invention

The following will describe some specific examples of variants of the invention with reference to photovoltaic panels, but it is understood that the invention is generally applicable to systems of solar energy conversion panels adapted to generate electric energy, e.g. by photovoltaic conversion, or adapted to generate thermal energy for heating up a fluid, e.g. water.

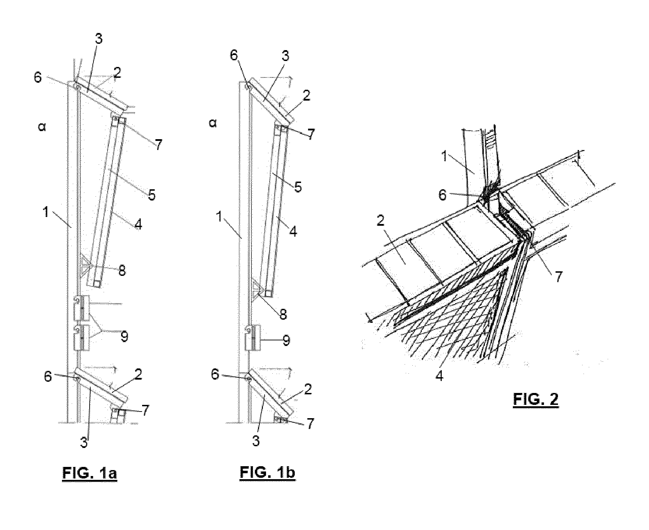

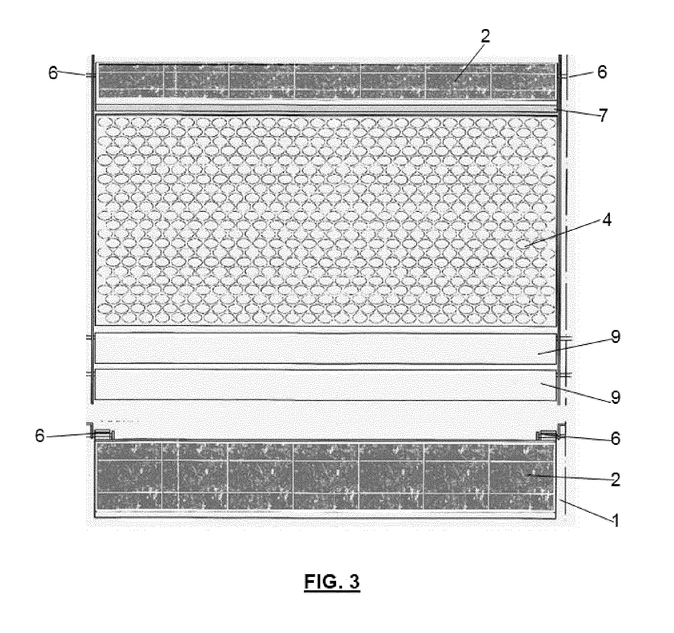

With reference to Figures 1a, 1b, 2 and 3, the system essentially comprises:
- one or more support brackets 1, applied vertically and parallel to each other onto the vertical support surface (not shown) whereto the system is installed;
- one or more rows of arrays of photovoltaic panels 2, preferably applied onto respective array support frames 3;
- one or more rows of frames 5, preferably acting as supports for diffusing elements or panels 4 applied onto said frames;
- one or more first upper coupling systems 6, preferably of the hinge type, adapted to couple the top side of the arrays of photovoltaic panels 2, 3 to the vertical support 1;
- one or more hinging systems 7, adapted to couple the bottom side of the arrays of photovoltaic panels 2, 3 to the top side of the diffusing elements 4, 5;
- one or more carriages 8 or sliding systems, adapted to slideably couple the bottom side of the diffusing elements 4,5 to the support bracket 1.

In accordance with the invention, as aforementioned, the frames 5 support respective diffusing panels 4 adapted to diffuse the light impacting upon them towards the underlying photovoltaic panels, thereby increasing the efficiency of the photovoltaic panel.

Preferably, the diffusing panels may be manufactured by using machined, perforated, coloured metal sheets, e.g. made of aluminum, copper, metal mesh, stretched mesh, etc.

In a preferred embodiment, the diffusing panels may be manufactured as self-supporting high-pressure laminates.

Preferably, the diffusing panels may also be equipped with special aesthetic/decorative features.

Advantageously, the materials of the diffusing panels are suited to outdoor exposition and are resistant to light and weather.

Preferably, such materials comply with Part 6 of the EN 438:2005 standard.

More in detail, it is possible to use a material internally consisting of one or more layers of cellulose-based fibres impregnated with phenolic resins, coated with one or more surface layers having an aesthetic function, made of cellulose-based fibres impregnated with thermohardening resins.

The aesthetic/decorative aspect is preferably taken into consideration because the diffusing panels are easily visible to people standing in front of the building whereto the system according to the invention has been applied.

It should be noted that the use of diffusing panels, as opposed to mirrors or generic reflective elements, provides significant advantages.

First of all, solar energy conversion efficiency is optimized because the received radiations are distributed more evenly and homogeneously onto the underlying conversion panels. This has been demonstrated by scientific studies on this matter, where solutions based on specular reflection have been compared with solutions based on the diffusion phenomenon.

Moreover, the diffusing panels avoid particularly annoying reflections, which might be potentially very dangerous for pedestrians and/or drivers passing by the system when the sun is in a position such that the reflected radiations are not incident on the underlying panel, but on the ground in the immediate vicinity of the system itself.

The system can have variable orientation, by rotating about the hinges 6, 7 and sliding on the carriages 8. In this way, the angle of the photovoltaic panels will follow the sun, preferably between a maximum and a minimum values of the angle relative to the vertical.

It is thus possible to create a rotary handling system of a *per se* known type, e.g. controlled by a sun-tracking control system.

The vertical support brackets 1 may not be necessary, in that the system can be applied directly to the vertical surface, e.g. a wall of a building.

One or more horizontal compensation panels 9 may be applied to the support brackets 1 for filling or decoration purposes, which can be removed should they overlap with the panels.

The distance between successive rows of panel arrays is such as to ensure that the panels in a row will not be shaded by an adjacent row.

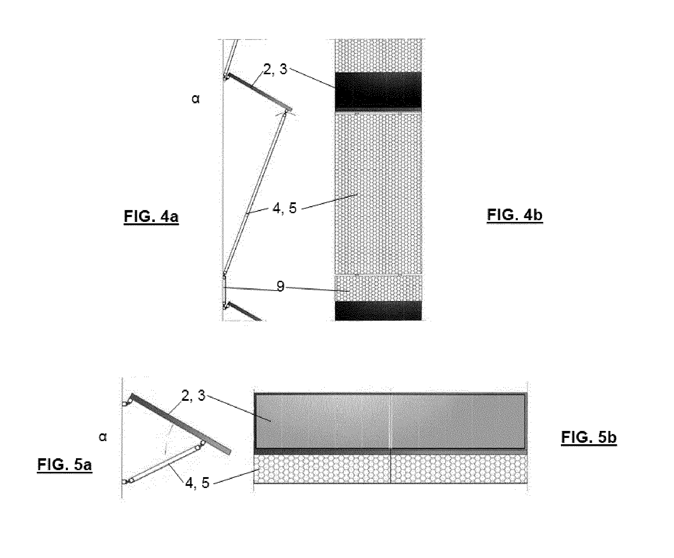

Figures 4a and 4b show a variant of the system, wherein the panels have a fixed angle, since their supports are fixed, and can be manufactured in a *per se* known manner.

Figures 5a and 5b show a variant of the system in the form of a cantilever roof applicable, for example, to a wall of a building, e.g. above a door.

In possible variants, such as those shown in Figures 4a, 4b, 5a, 5b, the support frames 3, 5 of the photovoltaic panels 2 and of the diffusing elements 4, with the respective coupling and/or hinging systems 6, 7, 8, can be applied directly to the vertical surfaces, thus avoiding the use of any support brackets.

As an alternative, horizontal support brackets may be used, such as those designated by numerals 10 (Fig. 4) and 11 (Fig. 5a).

Further variants of the support systems are also possible.

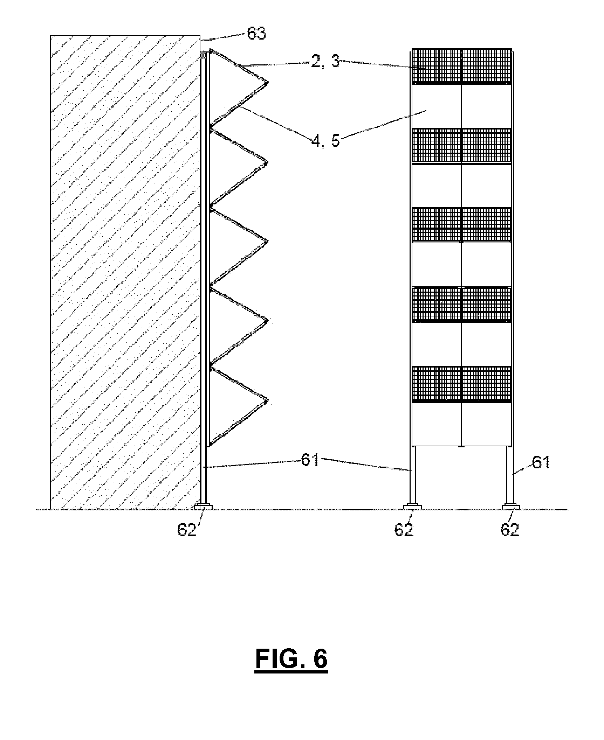

With reference to Fig. 6, a structure carrying the frames 3, 5 and the respective photovoltaic panels 2 and diffusing panels 4 can be employed, which comprises vertical brackets 61 with lower pedestals 62. The pedestals 62 rest on the ground, whereas the brackets 61 rest against the vertical surface 63, e.g. a wall of a building.

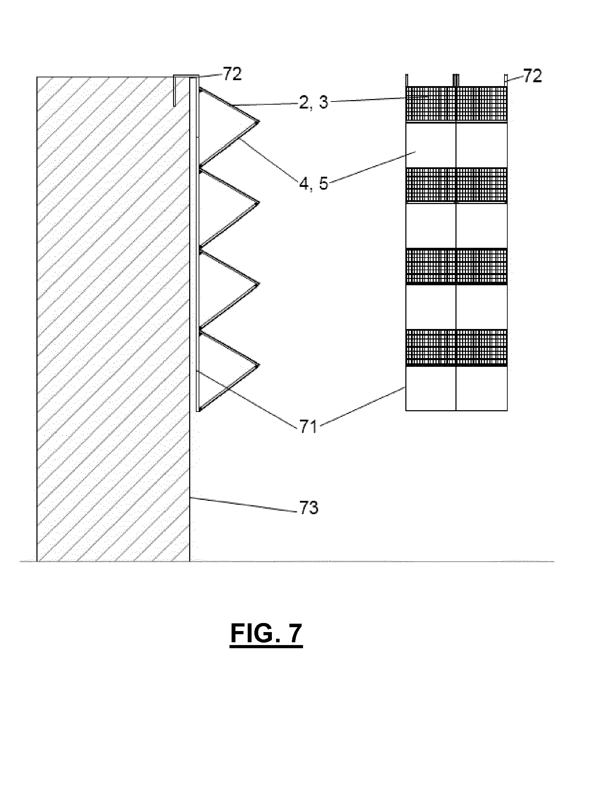

With reference to Fig. 7, a structure carrying the frames 3, 5 and the respective photovoltaic panels 2 and diffusing panels 4 can be employed, which comprises vertical brackets 71 and upper couplings 72. The couplings 72 can be applied to the top edge of the vertical surface 73, e.g. the edge of a terrace of a wall of a building. In this case, the structure is hung on the vertical surface.

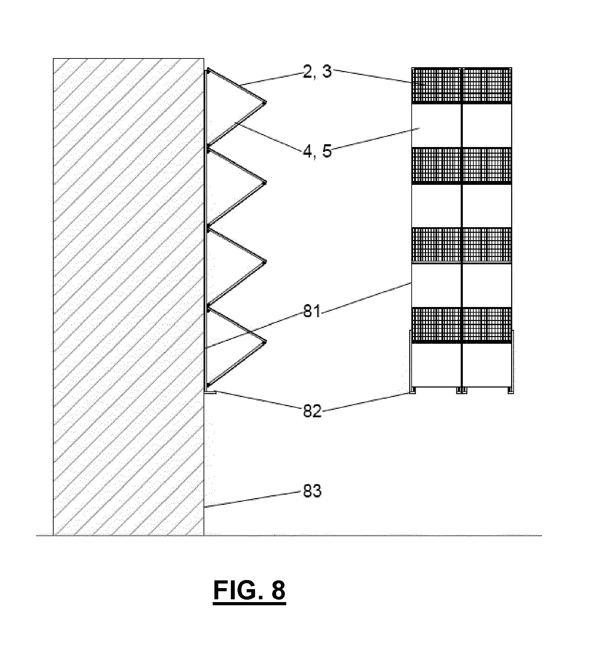

With reference to Fig. 8, a structure carrying the frames 3, 5 and the respective photovoltaic panels 2 and diffusing panels 4 can be employed, which comprises vertical brackets 81 with lower shelves 82. The shelves 82 can be applied at a certain level of the vertical surface 83, e.g. a wall of a building. The shelves 82 acts as supports for the brackets 81, which rest against the vertical surface 83, e.g. a wall of a building.

In the various embodiments, the photovoltaic panel and the frame that supports the diffusing element can be considered to be two sides of a triangle, the third side of which can be the vertical surface. The panel is an upper side directed upwards, and the diffusing element is a lower side directed downwards. The inclination of the photovoltaic panel may take an angle α which may vary, for example, between 30° and 45° relative to the vertical bracket, so as to optimize the incidence of the solar rays, while the inclination of the diffusing element is determined by aesthetical requirements and by the need to avoid any interference with the solar rays that should hit the photovoltaic panel in the lower row.

The support structures, the frames, the anchoring elements, etc. may be made of aluminum, steel or even plastic, or any other wear and water resistant material.

General observations on the support structure.

The support structure of the photovoltaic panels should be secured at the bottom to the same anchoring element of the underlying panel.

Unlike installations on horizontal surfaces, this allows to have, on average, just one anchoring element per row of panels.

In order to be able to change the inclination of the photovoltaic panel 2 while still keeping it anchored to the same supports, the lower support structure 4, 5 is advantageously of the retractable type. The vertical stringers may consist of partially overlapped sections capable of sliding one over the other to reach the required total length.

General observations on the anchoring system.

The optimized inclination of the panel 2 is obtained through a metal support structure constrained to the panel by means of a system of hinges. This measure allows to have a single system capable of adapting itself to different inclinations, so as to meet different exposition, aesthetic or functional requirements.

The wall hinges can be anchored by means of a suitably shaped horizontal element (metal section, not designated in the drawings) that houses the fastening elements of the hinges. Such elements will in turn be secured to the vertical brackets 1.

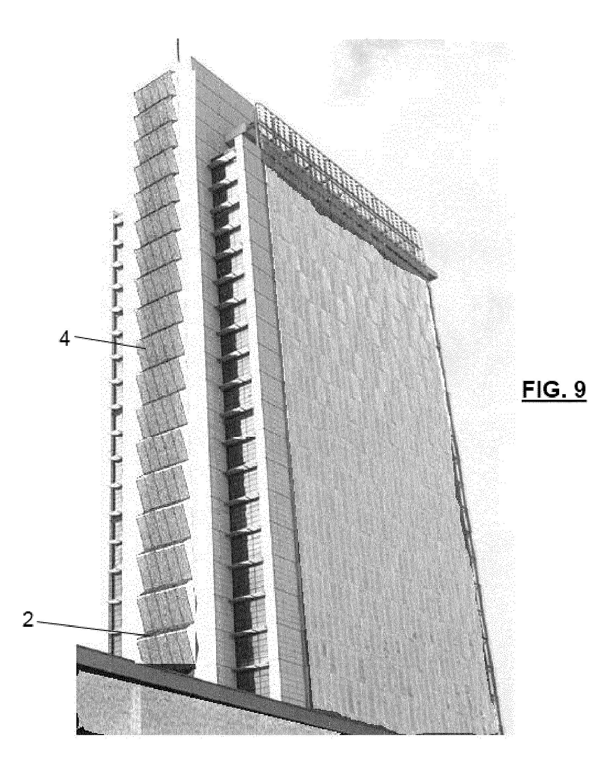

Figure 9 shows an example of application of the system to a wall of a building at a considerable height. As can be observed, only the part consisting of the series of diffusing elements 4 is visible from below, while the photovoltaic panels 2 tend to be invisible, thus improving the overall aesthetic effect.

In a preferred embodiment, the solar energy conversion panels 2 and the diffusing panels 4 are mounted to the vertical wall in a manner such that the substantially triangular profile defined by the solar panels 2, the diffusing panels 4 and the wall is substantially open, or anyway has a suitably sized aperture.

This ensures appropriate ventilation of the space between the solar panels 2 and the vertical wall, thereby bringing significant advantages in terms of system efficiency. In fact, conversion panels typically become less efficient as temperature rises. The fact that air can freely circulate between the panels and the vertical wall ensures an effective cooling of the conversion panel 2, so that the latter is kept within a high-efficiency operating range.

The solution described herein also provides a ventilation effect on the vertical wall, resulting in advantages in terms of temperature limitation, especially in the hottest periods of the year.

It should be noted that this embodiment aims at properly aerating both the conversion panels 2 and the vertical wall; unlike other prior-art solutions, no insulation is applied, e.g. thermal/acoustic insulation.

The advantages deriving from the application of the present invention are apparent.

It is a system that allows maximizing the efficiency of the photovoltaic generation system on vertical surfaces by optimizing the exposition inclination.

Significant advantages in terms of energetic efficiency are attained, also because of the use of the above-mentioned diffusing panels.

A further energetic efficiency increase can be attained with the preferred solution that provides suitable ventilation of the space between the conversion panels, the diffusing panels and the vertical wall.

Another advantage is given by the aeration of the vertical wall, obtained through the aperture in the triangle defined by the panel 2, the panel 4 and the vertical wall.

The system is fitted with a support structure capable of optimally tilting the photovoltaic panel without shading the underlying panels and jeopardizing the operation thereof.

The anchoring system is such as to minimize the structures required for installation. In particular, the system can be easily applied to walls of existing buildings; therefore, it needs not be integrated into the building during its construction.

The system can perform important functions for the architectural and energetic requalification of façades of existing buildings, through the installation of panels having decorative or covering functions into the support structure.

The same system is applicable to different situations by tilting the panels in a different way.

In view of an architecturally interesting result, the panels may even be installed at different inclinations on the same façade.

The costs of the system are low and can be modulated as a function of the finishing requirements.

The photovoltaic panels may be standard panels like those currently available on the market; in particular, they may be of the type protected by an aluminum frame. This allows the photovoltaic panel to have its own structural capacity, with the possibility of making the necessary adaptations in order to insert the system for anchoring it to the wall elements.

The proposed solution offers considerable advantages from a technical/economical viewpoint. In fact, notwithstanding the smaller active area available, there is a significant increase in the quantity of energy produced, e.g. compared to vertically installed panels.

The above-described embodiment example may be subject to variations without departing from the protection scope of the present invention, including all equivalent designs known to a man skilled in the art.

For example, in systems with thermal conversion panels, the man skilled in the art will be able to apply normal technical knowledge to connect the panels to the hydraulic system that will utilize the produced energy.

From the above description, those skilled in the art will be able to produce the object of the invention without introducing any further construction details.

## Claims

1. A system of solar energy conversion panels configured for application to a vertical surface, comprising:
- one or more rows of arrays of solar energy conversion panels (2);
- one or more rows of frames (5);
- one or more first fastening systems (6, 8), adapted to fasten, whether directly or indirectly, a top end of said arrays of solar energy conversion panels (2) and a bottom end of said one or more rows of frames (5) to said vertical surface;
- one or more second fastening systems (7), adapted to connect to each other a bottom end of said arrays of solar energy conversion panels (2) and a top end of said one or more rows of frames (5);
- said panel and frame being arranged at an angle other than zero relative to said vertical surface;
- said panel, frame and vertical surface describing a triangle, wherein the panel constitutes an upper side directed upwards and the frame constitutes a lower side directed downwards,
wherein each one of said frames (5) supports a respective diffusing panel adapted to diffuse the light impacting upon it towards the underlying solar energy conversion panel (2).

2. A system according to claim 1, wherein said arrays of solar energy conversion panels (2) are applied onto respective support frames (3).

3. A system according to claim 1 or 2, wherein said angle is either fixed or variable.

4. A system according to any one of the preceding claims, wherein said angle is such that the inclination of said arrays of solar energy conversion panels (2) can take an angle (α) variable between 30° and 45° relative to the support bracket (1).

5. A system according to any one of the preceding claims, wherein said diffusing panels (4) have a decorative surface facing downwards.

6. A system according to any one of the preceding claims, comprising one or more support brackets (1) adapted to be applied to said vertical surface for securing thereto said one or more first fastening systems (6, 8).

7. A system according to claim 6, wherein said one or more support brackets (1) are arranged either vertically or horizontally.

8. A system according to claim 6, wherein said one or more vertical support brackets (1) are fitted with lower support pedestals (62) at ground level, or with upper couplings (72) engaging with the vertical surface, or with lower shelves (82) to be fitted to the vertical surface, so that said vertical support brackets rest against the vertical surface.

9. A system according to any one of the preceding claims, wherein said triangle has an aperture adapted to allow aerating the space comprised between said solar energy conversion panel 1, said diffusing panel 4 and said vertical wall.

10. An array of solar energy conversion panels (2) configured for use in a system according to one of the preceding claims.

11. A diffusing element or panel (4) configured for use in a system according to one of the preceding claims.
